# FASCICULE DE BREVET EUROPEEN

(11) **EP 1 576 555 B1**
(45) Date de publication et mention de la délivrance du brevet: **13.02.2013**
(21) Numéro de dépôt: 03813165.2
(22) Date de dépôt: 11.12.2003
(51) Int. Cl.: G07F 17/24, G07B 15/02

(54) **BORNE DE STATIONNEMENT**
PARKTERMINAL
PARKING TERMINAL

(30) Priorité: 12.12.2002 FR 0215882
(43) Date de publication de la demande: 21.09.2005
(73) Titulaire: Parkeon SAS, 92120 Montrouge (FR)
(72) Inventeur: MANDY, Damien, F-Fontain 25660 (FR)
(74) Mandataire: Domenego, Bertrand
(86) Numéro de dépôt international: PCT/FR2003/003674
(87) Numéro de publication internationale: WO 2004/055746

(56) Documents cités:
- WO-A-01/39033
- WO-A-01/57617
- WO-A-99/22348
- WO-A-02/097736
- FR-A- 2 809 433

## Description

La présente invention concerne une borne de stationnement ou terminal public de stationnement comprenant des moyens d'accès à au moins un serveur distant via un réseau de communication prédéterminé.

FR 2 809 433 A1 décrit une borne de stationnement du type précité.

Elle trouve une application dans le stationnement payant pour véhicules dans lequel des agents chargés du stationnement payant dialoguent avec un serveur distant pour échanger des informations relatives à l'exploitation du stationnement payant et/ou des informations destinées aux usagers.

Actuellement, les agents chargés du stationnement payant sont équipés de terminaux distants, mobiles, portables et autonomes qui nécessitent de se connecter à un serveur central pour récupérer des informations, les traiter et les diffuser à destination des agents et/ou des usagers.

Par exemple, un agent se connecte au serveur central pour récupérer un taux de paiement du stationnement ou vérifier la validité d'un titre de stationnement. L'agent peut aussi se connecter pour récupérer des informations à destination des usagers. L'agent peut encore se connecter pour transmettre des informations relatives à son activité telles que la prise et la fin de son service, ou pour transmettre des informations liées au nombre de véhicules pour lesquels les droits de stationnement ont été vérifiés ainsi que des informations relatives aux constats d'infraction.

Selon un autre exemple, l'agent de maintenance peut transmettre des informations relatives aux opérations réalisées (changement de consommables, compte rendu d'opération de maintenance préventive...).

En pratique, le serveur central est distant. Il en résulte que les agents se déplacent jusqu'à celui-ci, ou effectuent une connexion via un réseau de communication tel que le réseau de communication mobile GSM.

Un tel procédé n'est pas totalement satisfaisant car il est de mise en oeuvre coûteuse en raison des déplacements des agents, des communications téléphoniques payantes, ou de l'équipement des terminaux distants en modem.

La présente invention remédie à cet inconvénient.

Elle porte sur une borne agissant comme un terminal public de stationnement comprenant des moyens d'accès à au moins un serveur distant via un réseau de communication prédéterminé.

A cet effet, l'invention a pour objet une borne de stationnement selon la revendication 1.

Suivant d'autres aspects avantageux de l'invention, la borne de stationnement est conforme à l'une des revendications 2 à 4.

Selon une définition générale de l'invention, la borne comprend en outre un module de communication sans contact (par exemple infra-rouge ou radiofréquence) apte à dialoguer par ce type de communication, que l'on notera «COMM» dans la suite, avec un terminal distant et des moyens de routage aptes à recevoir les informations émanant du terminal distant par cette voie de communication et à les router à destination du serveur distant via le réseau de communication et réciproquement.

L'intérêt de «COMM» est de pouvoir communiquer en s'affranchissant d'un réseau de télécommunication, et donc des coûts liés à un tel réseau.

Ainsi, lorsqu'un agent souhaite communiquer avec un serveur par exemple le serveur central d'un parc de stationnement payant, ledit agent dialogue avec le serveur via communication «COMM» entre le terminal distant et la borne et via le réseau de communication entre la borne et le serveur et réciproquement. Une telle borne permet ainsi une communication entre le terminal et le serveur tout en s'affranchissant d'un réseau de communication payant entre le terminal et la borne et sans équiper le terminal d'un modem onéreux.

Par exemple, les moyens d'accès sont aptes à accéder à au moins un réseau de communication du type Internet ou analogue.

Par exemple, le module de communication du type «COMM» de la borne d'accès est du type IrDA, WiFi ou Bluetooth.

La présente invention a également pour objet une installation selon la revendication 5.

La présente invention a encore pour objet une installation selon la revendication 6 ou 7.

La présente invention a également pour objet un procédé d'accès à un service à l'aide d'une borne, selon la revendication 8.

Selon un autre aspect de l'invention, le procédé est conforme à la revendication 9.

D'autres caractéristiques et avantages de l'invention apparaîtront à la lumière de la description détaillée ci-après et des dessins dans lesquels la figure unique illustre à titre d'exemple non limitatif le procédé d'accès à un serveur dédié à la gestion d'un parc de stationnement payant selon l'invention.

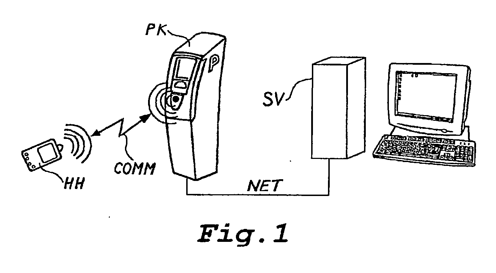

En référence à la figure 1, la borne d'accès PK est un horodateur pour le stationnement payant de véhicules.

De façon connue, l'horodateur PK est équipé de moyens d'accès à au moins un serveur distant SV via un réseau de communication NET du type Internet ou analogue.

Par exemple, les moyens d'accès comprennent un modem ADSL permettant de transmettre des données sur une ligne d'abonné numérique à débit symétrique. Tout autre modem peut bien évidemment convenir pour la connexion à un réseau de communication.

D'autres moyens d'accès au serveur SV depuis le terminal PK sont par exemple un réseau NET par fibres optiques ou un réseau de télécommunication NET non filaire de type GSM ou GPRS.

Dans l'exemple de la figure 1, l'horodateur PK comprend un module COMM de type WiFi (norme 802.11b) possédant un module émetteur/récepteur muni d'au moins une antenne. Le module WiFi de l'horodateur est apte à dialoguer par voie radiofréquence avec au moins un terminal de traitement distant HH équipé d'un module WiFi compatible avec celui de l'horodateur.

L'horodateur PK comprend des moyens de traitement aptes à gérer le module WiFi, et à utiliser les moyens d'accès comme relais de communication pour le terminal de traitement distant HH.

Par exemple, ces moyens de traitement comprennent un routeur de communication apte à recevoir les informations émanant du terminal par la voie radiofréquence Wifi et à les router à destination du serveur via le réseau de communication et réciproquement.

D'autres moyens de communication à courte portée, permettent d'échanger de la voix et/ou des données entre le terminal de traitement distant HH et l'horodateur PK peuvent être envisagés comme par exemple, ceux compatibles avec le protocole Bluetooth ou IrDA.

De son côté, le terminal distant HH appartient au groupe formé par les ordinateurs portables ou fixes, les assistants personnels ou analogues.

Le terminal distant HH et la borne d'accès PK sont ainsi équipés de moyens de communication radiofréquence courte portée conjugués qui permettent au terminal distant HH de dialoguer à distance avec le serveur distant SV via la borne d'accès PK tout en s'affranchissant des impacts de la mise en place sur le terminal distant HH d'un accès à un réseau de communication spécifique entre la borne d'accès PK et le terminal distant HH.

Dans le cas de la gestion d'un parc de stationnement, la séquence des étapes est par exemple la suivante.

Un agent qui dresse les constats d'infraction arrive dans la zone de couverture d'un horodateur avec un terminal (ordinateur portable, assistant personnel) équipé d'un module radiofréquence compatible avec celui de l'horodateur.

L'agent ouvre une session radiofréquence avec la borne et demande après le cas échéant un contrôle d'accès avec mot de passe, un accès à un service délivré par le serveur central gérant le parc de stationnement payant.

Le service peut consister par exemple à requérir le chargement d'un fichier relatif au paiement du stationnement payant.

Après validation du contrôle d'accès au niveau de la borne et/ou au niveau du serveur et en réponse à la requête de l'agent, le serveur transmet le fichier demandé via le réseau de communication, la borne se chargeant de recevoir les informations émanant du serveur via le réseau de communication et les relayer (router) vers le terminal via la voie radiofréquence.

Le terminal distant de l'agent est de préférence équipé d'un kit de connexion permettant de communiquer avec la borne. Ce kit de connexion peut être installé au préalable ou téléchargé par exemple après une session de paiement utilisant les moyens de paiement de l'horodateur. De même l'accès au service peut être validé à l'issue d'une session de paiement utilisant les moyens de paiement de la borne d'accès.

## Revendications

1. **Borne de stationnement (PK) comprenant :**
- des moyens d'accès à au moins un serveur distant (SV) dédié à la gestion d'un parc de stationnement payant, via un réseau de communication (NET) prédéterminé,
- un module de communication courte portée apte à dialoguer par une voie (COMM) de communication courte portée et sans contact avec celui d'au moins un terminal distant (HH), le terminal distant (HH) appartenant à un agent chargé du stationnement payant qui dresse des constats d'infraction,
**caractérisée en ce qu'**elle comprend en outre un routeur de communication apte à recevoir des informations relatives à l'exploitation du stationnement payant, émanant du terminal distant (HH), par ladite voie (COMM) de communication et à les router à destination du serveur distant (SV) via le réseau de communication (NET) et réciproquement.

2. Borne selon la revendication 1, **caractérisée en ce que** le routeur de communication permet un dialogue entre le terminal distant (HH) et le serveur distant (SV).

3. Borne selon la revendication 1 ou 2, **caractérisée en ce que** les moyens d'accès sont aptes à accéder au serveur distant via le réseau Internet.

4. Borne selon l'une des revendications 1 à 3, **caractérisée en ce que** le module de communication courte portée est du type radiofréquence (WiFi ou Bluetooth) ou infra-rouge (IrDA).

5. Installation comprenant une borne (PK) selon l'une quelconque des revendications 1 à 4, un serveur distant dédié à la gestion d'un parc de stationnement payant, et un terminal distant (HH) appartenant à un agent chargé du stationnement payant qui dresse des constats d'infraction, dans laquelle :
le terminal distant (HH) est configuré pour émettre une requête de chargement d'un fichier relatif au paiement du stationnement payant, à destination du serveur distant (SV), via le routeur de communication,
le serveur distant est configuré pour, en réponse à la requête de chargement d'un fichier émise par le terminal distant (HH) et reçue par le serveur distant (SV), transmettre le fichier demandé à destination du terminal distant (HH), via le réseau de communication (NET).

6. Installation selon la revendication 5, **caractérisée en ce que** le terminal distant (HH) appartient au groupe formé par les ordinateurs portables ou fixes, et les assistants personnels.

7. Procédé d'accès à un service à l'aide d'une borne de stationnement (PK) équipée :
- de moyens d'accès à au moins un serveur distant (SV) dédié à la gestion d'un parc de stationnement payant, via un réseau de communication (NET) prédéterminé,
- d'un module de communication courte portée apte à dialoguer par une voie (COMM) de communication courte portée et sans contact avec celui d'au moins un terminal distant (HH), le terminal distant (HH) appartenant à un agent chargé du stationnement payant qui dresse des constats d'infraction, et
- d'un routeur apte à recevoir des informations relatives à l'exploitation du stationnement payant, émanant du terminal distant (HH) par ladite voie (COMM) de communication et à les router à destination du serveur distant (SV) via le réseau de communication (NET) et réciproquement,
le procédé comprenant une étape au cours de laquelle le routeur route des informations reçues émanant du terminal distant (HH), par communication courte portée, à destination du serveur distant (SV) via le réseau de communication (NET) et réciproquement, et
les informations comprenant une requête de chargement d'un fichier relatif au paiement du stationnement payant transmise depuis le terminal distant (HH) jusqu'au serveur distant (SV), ainsi que le fichier demandé transmis depuis le serveur distant (SV) jusqu'au terminal distant (HH).

## Claims

1. Parking meter (PK) comprising:
- means for accessing at leas one remote server (SV), which is dedicated to the control of a chargeable car park, via a predetermined communication network (NET),
- a short-range communication module adapted to dialog via a short-range and contactless communication channel (COMM) with a short-range communication module of at least one remote terminal (HH), said remote terminal (HH) belonging to an operator of the car park who issues tickets that levy parking fines,
**characterised in that** it further comprises a communication router adapted to receive information relating to the use of the chargeable car park, from the remote terminal (HH) via the communication channel (COMM), and to route that information to the remote server (SV) via the communication network (NET), and the other way round.

2. Parking meter according to claim 1, **characterised in that** the communication router enables a dialog between the remote terminal (HH) and the remote server (SV).

3. Parking meter according to claim 1 or 2, **characterized in that** the access means are adapted to access the remote server via the Internet.

4. Parking meter according to anyone of claims 1 to 3, **characterized in that** the short-range communication module is of the radio (WiFi or Bluetooth) or infra red (IrDA) type.

5. System comprising a parking meter (PK) according to anyone of claims 1 to 4, a remote server dedicated to the control of a chargeable car park, and a remote terminal belonging to an operator of the car park who issues fine tickets, wherein:
- the remote terminal (HH) is intended to emit a request for loading a file relative to the payment of the chargeable parking, to the remote server (SV), via the communication router,
- the remote server is intended, in response to said request, to transmit the requested file to the remote terminal (HH) via the communication router.

6. System according to claim 5, **characterised in that** the remote terminal (HH) belongs to the group comprising portable or fixed computers, personal digital assistants.

7. Method of access to a service using a parking meter (PK) comprising:
- means for accessing at leas one remote server (SV), which is dedicated to the control of a chargeable car park, via a predetermined communication network (NET),
- a short-range communication module adapted to dialog via a short-range and contact less communication channel (COMM) with a short-range communication module of at least one remote terminal (HH), said remote terminal (HH) belonging to an operator of the car park who issues tickets that levy parking fines, and
- a communication router adapted to receive information relative to the use of the chargeable car park, from the remote terminal (HH) via the communication channel (COMM), and to route that information to the remote server (SV) via the communication network (NET), and the other way round,
said method comprising a step wherein the communication router routes information received from the remote terminal (HH), by short-range communication, to the remote server (SV) via the communication network (NET), and the other way round,
the information comprising a request, transmitted from the remote terminal (HH) to the remote server (SV) for loading a file relative to the payment of the chargeable parking, and the requested file, transmitted from the remote server (SV) to the remote terminal (HH).

## Patentansprüche

1. Parksäule (PK) umfassend:
- Mittel für den Zugang zu wenigstens einem zur Verwaltung eines gebührenpflichtigen Parkplatzes bestimmten entfernten Server (SV) über ein vorbestimmtes Kommunikationsnetz (NET),
- ein Modul zur Nahbereichskommunikation, das geeignet ist, über einen Kanal (COMM) zur kontaktlosen Nahbereichskommunikation mit demjenigen von wenigstens einem entfernten Terminal (HH) zu kommunizieren, wobei das entfernte Terminal (HH) einem für den gebührenpflichtigen Parkplatz zuständigen Angestellten gehört, der Strafzettel ausstellt,
**dadurch gekennzeichnet, dass** sie ferner einen Kommunikationsrouter umfasst, der geeignet ist, von dem entfernten Terminal (HH) kommende Informationen bezüglich des Betriebs des gebührenpflichtigen Parkplatzes über den Kommunikationskanal (COMM) zu empfangen und sie über das Kommunikationsnetz (NET) an den entfernten Server (SV) weiterzuleiten sowie umgekehrt.

2. Säule nach Anspruch 1, **dadurch gekennzeichnet, dass** der Kommunikationsrouter einen Dialog zwischen dem entfernten Terminal (HH) und dem entfernten Server (SV) ermöglicht.

3. Säule nach Anspruch 1 oder 2, **dadurch gekennzeichnet, dass** die Zugangsmittel geeignet sind, über das Internet auf den entfernten Server zuzugreifen.

4. Säule nach einem der Ansprüche 1 bis 3, **dadurch gekennzeichnet, dass** das Nahbereichskommunikationsmodul vom Typ Funkfrequenz (WiFi oder Bluetooth) oder Infrarot (IrDA) ist.

5. Einrichtung, umfassend eine Säule (PK) nach einem der Ansprüche 1 bis 4, einen zur Verwaltung eines gebührenpflichtigen Parkplatzes bestimmten entfernten Server sowie ein entferntes Terminal (HH), das einem für den gebührenpflichtigen Parkplatz zuständigen Angestellten gehört, der Strafzettel ausstellt, wobei:
das entfernte Terminal (HH) ausgebildet ist, um eine Anfrage zum Laden einer Datei bezüglich der Bezahlung des gebührenpflichtigen Parkens über den Kommunikationsrouter an den entfernten Server (SV) zu senden,
der entfernte Server ausgebildet ist, um als Reaktion auf die durch das entfernte Terminal (HH) gesandte und durch den entfernte Server (SV) empfangene Anfrage zum Laden einer Datei die angeforderte Datei über das Kommunikationsnetz (NET) an das entfernte Terminal (HH) zu übertragen.

6. Einrichtung nach Anspruch 5, **dadurch gekennzeichnet, dass** das entfernte Terminal (HH) zu der durch tragbare oder feste Computer und Personal Assistants gebildeten Gruppe gehört.

7. Verfahren für den Zugang zu einem Dienst mit Hilfe einer Parksäule (PK), die ausgestattet ist mit:
- Mitteln für den Zugang zu wenigstens einem zur Verwaltung eines gebührenpflichtigen Parkplatzes bestimmten entfernten Server (SV) über ein vorbestimmtes Kommunikationsnetz (NET),
- einem Modul zur Nahbereichskommunikation, das geeignet ist, über einen Kanal (COMM) zur kontaktlosen Nahbereichskommunikation mit dernjenigen von wenigstens einem entfernten Terminal (HH) zu kommunizieren, wobei das entfernte Terminal (HH) einem für den gebührenpflichtigen Parkplatz zuständigen Angestellten gehört, der Strafzettel ausstellt, und
- einem Router, der geeignet ist, Informationen bezüglich des Betriebs des gebührenpflichtigen Parkplatzes von dem entfernten Terminal (HH) über den Kommunikationskanal (COMM) zu empfangen und sie über das Kommunikationsnetz (NET) an den entfernten Server (SV) weiterzuleiten sowie umgekehrt,
wobei das Verfahren einen Schritt umfasst, im Laufe dessen der Router von dem entfernten Terminal (HH) kommende empfangene Informationen per Nahbereichskommunikation über das Kommunikationsnetz (NET) an den entfernten Server (SV) weiterleitet sowie umgekehrt, und
wobei die Informationen eine Anfrage zum Laden einer Datei bezüglich der Bezahlung des gebührenpflichtigen Parkens, die von dem entfernten Terminal (HH) zu dem entfernten Server (SV) übertagen wird, sowie die angeforderte Datei, die von dem entfernten Server (SV) zu dem entfernten Terminal (HH) übertragen wird, umfassen.
